# EUROPÄISCHE PATENTANMELDUNG

(11) **EP 4 163 071 A1**
(43) Veröffentlichungstag der Anmeldung: **12.04.2023**
(21) Anmeldenummer: 21201907.9
(22) Anmeldetag: 11.10.2021
(51) Int. Cl.: B28D 1/04

(54) **RINGBOHRKRONE MIT EINER VERBESSERTEN BOHRKERNENTFERNUNG**

(71) Anmelder: Hilti Aktiengesellschaft, 9494 Schaan (LI)
(72) Erfinder: Hoop, Matthaeus, 9492 Eschen (LI); Sonderegger, Marcel, 9436 Balgach (CH)
(74) Vertreter: Hilti Aktiengesellschaft Corporate Intellectual Property

(57) **Zusammenfassung**

Ringbohrkrone aufweisend einen Bohrschaft und ein Ringsegment (22), das mit einer Unterseite an einer Stirnfläche des Bohrschaftes befestigt ist und das eine innere Mantelfläche (26) aufweist. Die innere Mantelfläche (26) weist senkrecht zur Längsachse (23) des Bohrschaftes einen Innenabstand (B(ϕ, h)) zur Längsachse (23) auf. Der Innenabstand (B(ϕ, h)) variiert in der Ebene senkrecht zur Längsachse (23) und weist einen ersten Minimalwert (B_{min,1}), einen ersten Maximalwert (B_{max,1}), einen zweiten Minimalwert (B_{min,2}) und einen zweiten Maximalwert (B_{max,2}) auf.

## Beschreibung

### Technisches Gebiet

Die vorliegende Erfindung betrifft eine Ringbohrkrone gemäß dem Oberbegriff des Anspruchs 1.

### Stand der Technik

Bei Diamantwerkzeugen, die als Bohrkronen zum Kernbohren ausgebildet sind, wird zwischen Ringbohrkronen mit einem geschlossenen Ringsegment und segmentierten Bohrkronen mit mehreren Bohrsegmenten unterschieden. Dabei werden Ringbohrkronen vor allem für Bohrkronen mit kleinen Durchmessern bis ca. 50 mm und segmentierte Bohrkronen für Bohrkronen mit Durchmessern ab 35 mm eingesetzt. Ringbohrkronen weisen aufgrund einer größeren Anbindungsfläche des Ringsegmentes zum Bohrschaft im Bohrbetrieb eine höhere mechanische Stabilität auf als, segmentierte Bohrkronen, wohingegen beim Aufbau der Bohrsegmente für segmentierte Bohrkronen die Vorteile von gesetzten Diamantpartikeln genutzt werden können.

Bekannte Ringbohrkronen umfassen einen Bohrschaft mit einem Einsteckende und ein Ringsegment, das mit einer Unterseite an einer Stirnfläche des Bohrschaftes befestigt ist; die Ringbohrkrone kann über das Einsteckende in der Werkzeugaufnahme eines Kernbohrgerätes befestigt werden. Der Bohrschaft weist einen Zylinder mit einer Längsachse auf und das Ringsegment weist eine innere Mantelfläche und eine äußere Mantelfläche auf, wobei die innere Mantelfläche zylinderförmig ausgebildet ist und in einer Ebene senkrecht zur Längsachse einen konstanten Innenabstand zur Längsachse aufweist.

Beim Bohren eines Untergrundes, z.B. einer Mauer, einer Betonwand oder einer Betondecke, entsteht im Inneren der Bohrkrone ein Bohrkern, der nach dem Bohren aus der Bohrkrone entfernt werden muss, wobei es zu Problemen kommen kann und der Bohrkern sich im Inneren verklemmt. Besondere Probleme bereiten Bruchstücke, die aus dem Bohrkern herausbrechen und sich zwischen Bohrkrone und Bohrkern verklemmen können.

### Darstellung der Erfindung

Die Aufgabe der vorliegenden Erfindung besteht darin, eine Ringbohrkrone mit einem Ringsegment zu entwickeln, bei der das Risiko von klemmenden Bohrkernen reduziert ist. Außerdem soll das Entfernen eines klemmenden Bohrkerns vereinfacht werden.

Diese Aufgabe wird bei der eingangs genannten Ringbohrkrone erfindungsgemäß durch die Merkmale des unabhängigen Anspruchs 1 gelöst. Vorteilhafte Weiterbildungen sind in den abhängigen Ansprüchen angegeben.

Die Ringbohrkrone ist erfindungsgemäß dadurch gekennzeichnet, dass der Innenabstand in der Umfangsrichtung einen ersten Minimalwert, einen zweiten Minimalwert, einen ersten Maximalwert und einen zweiten Maximalwert aufweist, wobei der erste Maximalwert in der Umfangsrichtung zwischen dem ersten Minimalwert und zweiten Minimalwert angeordnet ist und der zweite Maximalwert in der Umfangsrichtung zwischen dem zweiten Minimalwert und ersten Minimalwert angeordnet ist.

Bei der erfindungsgemäßen Ringbohrkrone variiert der Innenabstand der inneren Mantelfläche über den Umfang des Ringsegmentes zwischen den Minimal- und Maximalwerten. Dabei bestimmt der kleinste Innenabstand zur Längsachse den Kerndurchmesser des Bohrkerns, der dem doppelten des kleinsten Innenabstandes entspricht. Durch die Variation des Innenabstandes über den Umfang des Ringsegmentes wird die Kontaktfläche des Ringsegmentes zum Bohrkern verringert und die Reibung zwischen dem Ringsegment und dem Bohrkern reduziert. Die Verteilung der ersten und zweiten Minimalwerte sowie der ersten und zweiten Maximalwerte über den Umfang des Ringsegmentes ermöglicht die Herstellung von Ringsegmenten, bei denen sich im Bohrbetrieb zwischen dem Ringsegment und dem Bohrkern über einen Teilumfang des Ringsegmentes ein Spalt bildet, der die Gefahr von klemmenden Bohrkernen reduziert und das Entfernen eines klemmenden Bohrkerns erleichtern kann. Das Ringsegment sollte maximal zwei Minimalwerte mit dem gleichen kleinsten Innenabstand aufweisen.

Bevorzugt stimmen der erste Minimalwert und der zweite Minimalwert überein. Ein Ringsegment, bei dem der erste Minimalwert und der zweite Minimalwert des Innenabstandes im Rahmen der Fertigungsgenauigkeiten übereinstimmen, erzielt im Bohrbetrieb einen gleichmäßigen Abtrag und kann Vibrationen der Ringbohrkrone reduzieren.

Bevorzugt sind der erste Minimalwert und der zweite Minimalwert in der Umfangsrichtung um 180° zueinander versetzt. Bei einem Versatz von ca. 180° liegen der erste und zweite Minimalwert in der Umfangsrichtung einander gegenüber und führen insbesondere bei Ringsegmenten mit übereinstimmenden ersten und zweiten Minimalwerten zu einem spiegelsymmetrischen Aufbau der inneren Mantelfläche. Durch den symmetrischen Aufbau können Vibrationen der Ringbohrkrone im Bohrbetrieb reduziert werden und die Laufruhe der Ringbohrkrone kann verbessert werden.

Bevorzugt beschreibt der Innenabstand über den Umfang des Ringsegmentes eine mathematische Funktion, die im Bereich des ersten Minimalwertes und des zweiten Minimalwertes streng monoton verlaufend ist. Durch einen streng monotonen Verlauf des Innenabstandes im Bereich der Minimalwerte wird die Kontaktfläche des Ringsegmentes zum Bohrkern verringert und die Reibung zwischen dem Ringsegment und dem Bohrkern reduziert. Außerdem werden die Bereiche, in denen der Bohrkern klemmen kann, weiter reduziert.

Bevorzugt stimmen der erste Maximalwert und der zweite Maximalwert überein. Ein Ringsegment, bei dem der erste Maximalwert und der zweite Maximalwert des Innenabstandes im Rahmen der Fertigungsgenauigkeiten übereinstimmen, erzielt im Bohrbetrieb einen gleichmäßigen Abtrag und kann Vibrationen der Ringbohrkrone reduzieren.

Bevorzugt sind der erste Maximalwert und der zweite Maximalwert in der Umfangsrichtung um 180° zueinander versetzt. Bei einem Versatz von 180° liegen der erste und zweite Maximalwert in der Umfangsrichtung einander gegenüber. Diese Verteilung der ersten und zweiten Maximalwerte über den Umfang des Ringsegmentes ermöglicht die Herstellung von Ringsegmenten, bei denen sich im Bohrbetrieb zwischen dem Ringsegment und dem Bohrkern über einen Teilumfang ein Spalt bildet, wobei der maximale Spalt im Bereich der maximalen Innenabstände vorliegt. Ein klemmender Bohrkern kann vom Bediener im Ringsegment bewegt werden, wodurch das Entfernen eines klemmenden Bohrkerns erleichtert wird.

Besonders bevorzugt weist die innere Mantelfläche des Ringsegmentes in der Ebene senkrecht zur Längsachse des Bohrschaftes eine elliptische Form mit einer kurzen Halbachse und einer langen Halbachse auf, wobei der erste und zweite Minimalwert die kurze Halbachse und der erste und zweite Maximalwert die lange Halbachse bilden. Die elliptische Form der inneren Mantelfläche ermöglicht einen streng monotonen Verlauf des Innenabstandes im Bereich der Minimalwerte.

In einer ersten Variante ist die innere Mantelfläche des Ringsegmentes als Zylinder mit einer Grundfläche, die von einer Kreisform verschieden ist, ausgebildet. Die Ausbildung der inneren Mantelfläche als Zylinder hat den Vorteil, dass die Abtrageigenschaften des Ringsegmentes über die Höhe konstant sind. Durch die Verwendung eines Zylinders mit einer nicht-kreisförmigen Grundfläche kann die Kontaktfläche zwischen dem Ringsegment und dem Bohrkern reduziert werden. Besonders bevorzugt weist die Grundfläche eine Ellipsenform auf; die Ellipsenform eignet sich besonders als nicht-kreisförmige Grundfläche.

In einer zweiten Variante ist die innere Mantelfläche des Ringsegmentes als Innenkonus, der sich in Richtung einer der Unterseite des Ringsegmentes gegenüberliegenden Oberseite verjüngt, ausgebildet. Ein Ringsegment, dessen innere Mantelfläche als Innenkonus mit einer nicht-kreisförmigen Grundfläche ausgebildet ist, hat den Vorteil, dass die Kontaktfläche weiter verringert und die Reibung zwischen dem Ringsegment und dem Bohrkern reduziert wird. Dadurch, dass sich der Innenkonus in Richtung der Oberseite des Ringsegmentes verjüngt, kann das Entfernen eines klemmenden Bohrkerns erleichtert werden. Das Risiko, dass der Bohrkern im Ringsegment klemmt, ist im Bereich des kleinsten Innenabstandes am größten. Da die Oberseite des Ringsegmentes für den Bediener zugänglich ist, kann der Bediener den klemmenden Bohrkern entfernen.

Bevorzugt weist der Innenkonus eine Grundfläche auf, die von einer Kreisform verschieden ist. Besonders bevorzugt weist die Grundfläche eine Ellipsenform auf; die Ellipsenform eignet sich besonders als nicht-kreisförmige Grundfläche.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIG. 1: eine erfindungsgemäße Ringbohrkrone mit einem Bohrschaft und einem Ringsegment, das am Bohrschaft befestigt ist;
- FIGN. 2A,: B eine erfindungsgemäße Ringbohrkrone mit einem Bohrschaft und einer ersten Ausführungsform eines Ringsegmentes in einem Längsschnitt parallel zur Längsachse des Bohrschaftes (FIG. 2A) und das Ringsegment in einem Querschnitt senkrecht zur Längsachse des Bohrschaftes (FIG. 2B); und

- FIG. 3A, B: eine zweite Ausführungsform des Ringsegmentes in einem Längsschnitt parallel zur Längsachse des Bohrschaftes (FIG. 3A) und einem Querschnitt senkrecht zur Längsachse des Bohrschaftes (FIG. 3B).

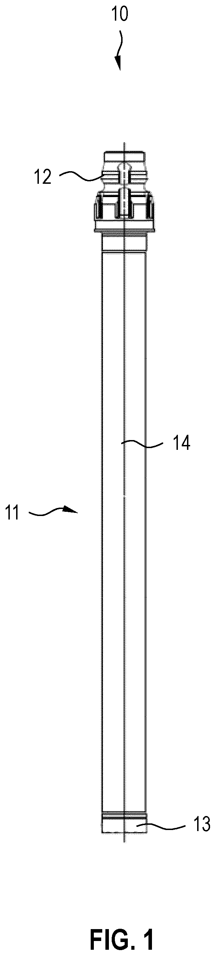

**FIG. 1** zeigt eine Ringbohrkrone **10,** die einen Bohrschaft **11** mit einem Einsteckende **12** und ein geschlossenes Ringsegment **13** aufweist. Die Ringbohrkrone 10 wird über das Einsteckende 12 in der Werkzeugaufnahme eines Kernbohrgerätes befestigt und im Bohrbetrieb vom Kernbohrgerät um eine Drehachse angetrieben, die koaxial zur Längsachse **14** des Bohrschaftes 11 verläuft.

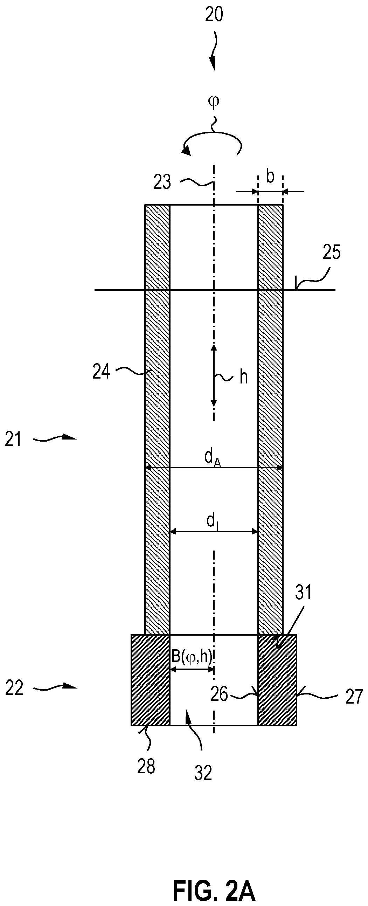

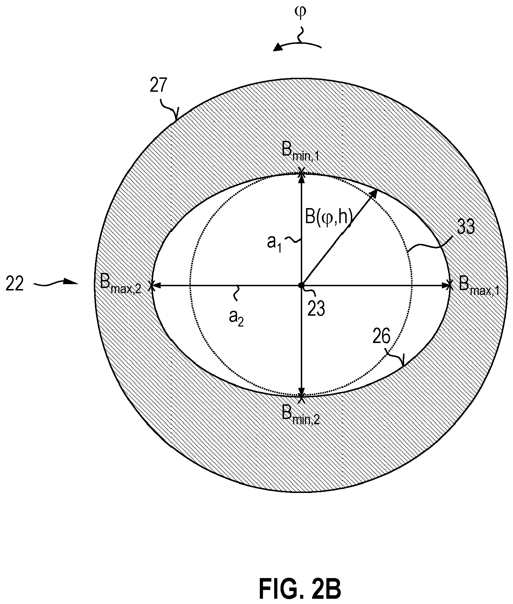

**FIGN. 2A****, B** zeigen eine erfindungsgemäße Bohrkrone **20,** die einen Bohrschaft **21** und ein Ringsegment **22** aufweist. Dabei zeigt FIG. 2A den Bohrschaft 21 und das Ringsegment 22 in einem Längsschnitt parallel zur Längsachse **23** des Bohrschaftes 21 und FIG. 2C das Ringsegment 22 in einem Querschnitt senkrecht zur Längsachse 23 des Bohrschaftes 21.

Der Bohrschaft 21 umfasst einen Zylinder **24,** der in einer Ebene **25** senkrecht zur Zylinderachse, die die Längsachse 23 des Bohrschaftes 21 definiert, einen Außendurchmesser **d**_{A}, einen Innendurchmesser **di** und eine Schaftbreite **b** aufweist. Im Ausführungsbeispiel sind der Innendurchmesser d_{I}, der Außendurchmesser d_{A} und die Schaftbreite b sowohl in einer Umfangsrichtung **ϕ** als auch in einer Höhenrichtung **h** konstant. Alternativ können der Innendurchmesser, der Außendurchmesser und/oder die Schaftbreite in der Umfangsrichtung ϕ und/oder der Höhenrichtung h variieren.

Das Ringsegment 22 umfasst eine innere Mantelfläche **26,** eine äußere Mantelfläche **27,** eine Unterseite **28** und eine Oberseite **29,** wobei das Ringsegment 22 mit der Unterseite 28 an einer Stirnfläche **31** des Bohrschaftes 21 befestigt ist. Die innere Mantelfläche 26 ist als Zylinder **32** mit einer Grundfläche, die von einer Kreisform verschieden ist, ausgebildet. Die Ausbildung der inneren Mantelfläche 26 als Zylinder hat den Vorteil, dass die Abtrageigenschaften des Ringsegmentes 22 über die Höhe konstant sind.

Die innere Mantelfläche 26 weist in der Ebene 25 senkrecht zur Längsachse 23 einen Innenabstand **B(ϕ, h)** zur Längsachse 23 auf. Dabei definiert der Innenabstand B(ϕ, h) eine mathematische Funktion, die den Verlauf des Innenabstandes über den Umfang und die Höhe des Ringsegmentes 22 beschreibt. Der Innenabstand B(ϕ, h) variiert in der Umfangsrichtung ϕ über den Umfang des Ringsegmentes 22 zwischen zwei Minimalwerten und zwei Maximalwerten; in der Höhenrichtung h ist der Innenabstand B(ϕ, h) konstant. In der Ebene 25 senkrecht zur Längsachse 23 weist der Innenabstand B(ϕ, h) einen ersten Minimalwert **B_{min,1}**, einen ersten Maximalwert **B**_{**max**,**1**}, einen zweiten Minimalwert **B_{min,2}** und einen zweiten Maximalwert **B_{max,2}** auf.

Im Ausführungsbeispiel sind der erste Minimalwert B_{min,1} und zweite Minimalwert B_{min,2} in der Umfangsrichtung ϕ um ca. 180° zueinander versetzt und der erste Maximalwert B_{max,1} und zweite Maximalwert B_{max,2} sind in der Umfangsrichtung ebenfalls um ca. 180° zueinander versetzt. Bei einem Versatz von ca. 180° liegen die Minimalwerte B_{min,1}, B_{min,2} sowie die Maximalwerte B_{max,1}, B_{max,2} in der Umfangsrichtung ϕ einander gegenüber und führen zu einem spiegelsymmetrischen Aufbau der inneren Mantelfläche 26. Durch den symmetrischen Aufbau können Vibrationen der Bohrkrone 20 im Bohrbetrieb reduziert und die Laufruhe der Bohrkrone 20 verbessert werden.

FIG. 2B zeigt das Ringsegment 22 und einen Bohrkern 33, den die Bohrkrone 20 im Bohrbetrieb erzeugt, im Querschnitt senkrecht zur Längsachse 23 des Bohrschaftes 21. Der kleinste Innenabstand der inneren Mantelfläche 26 zur Längsachse 23 bestimmt den Kerndurchmesser, der dem doppelten des kleinsten Innenabstandes entspricht. Durch die Variation des Innenabstandes B(ϕ, h) wird die Kontaktfläche zum Bohrkern 33 verringert und die Reibung zwischen dem Ringsegment 22 und dem Bohrkern 33 reduziert.

Die Verteilung der ersten und zweiten Minimalwerte B_{min,1}, B_{min,2} sowie der ersten und zweiten Maximalwerte B_{max,1}, B_{max,2} über den Umfang des Ringsegmentes 22 ermöglicht die Herstellung von Ringsegmenten, bei denen sich im Bohrbetrieb zwischen dem Ringsegment 22 und dem Bohrkern 33 ein Spalt bildet, der die Gefahr von klemmenden Bohrkernen reduziert und das Entfernen eines klemmenden Bohrkerns erleichtert.

Im Ausführungsbeispiel weist die innere Mantelfläche 26 in der Ebene 25 senkrecht zur Längsachse 23 eine Ellipsenform mit einer kurzen Halbachse **a**₁ und einer langen Halbachse **a**₂ auf, wobei der erste und zweite Minimalwert B_{min,1}, B_{min,2} die kurze Halbachse a₁ und der erste und zweite Maximalwert B_{max,1}, B_{max,2} die lange Halbachse a₂ bilden. Die Ellipsenform eignet sich besonders als nicht-kreisförmige Grundfläche des Zylinders 32.

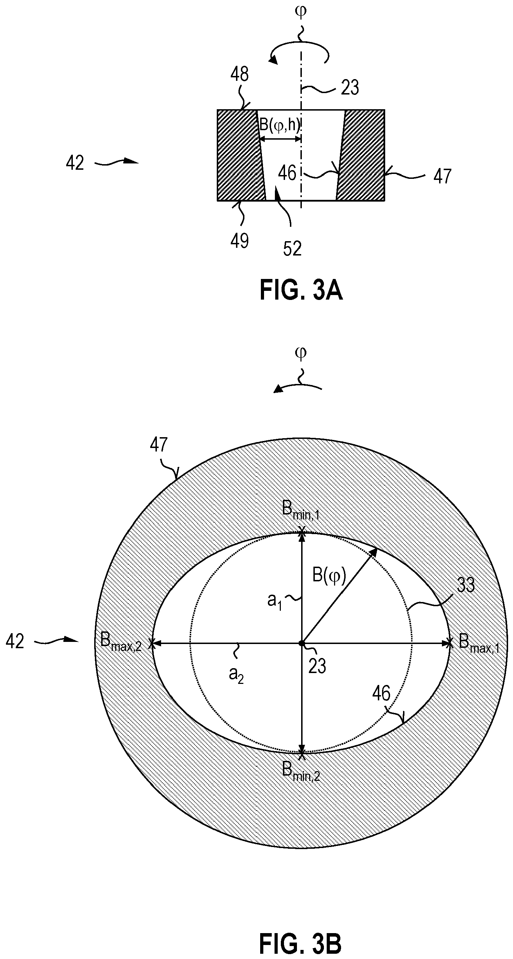

**FIGN. 3A****, B** zeigen eine zweite Ausführungsform eines Ringsegmentes 42 für die Bohrkrone 20 in einem Längsschnitt parallel zur Längsachse 23 des Bohrschaftes 21 (FIG. 3A) und in einem Querschnitt senkrecht zur Längsachse 23 des Bohrschaftes 21 (FIG. 3B). Das Ringsegment 42 unterscheidet sich vom Ringsegment 22 durch die Ausgestaltung der inneren Mantelfläche.

Das Ringsegment 42 umfasst eine innere Mantelfläche **46,** eine äußere Mantelfläche **47,** eine Unterseite **48** und eine Oberseite **49,** wobei das Ringsegment 42 mit der Unterseite 48 an der Stirnfläche 31 des Bohrschaftes 21 befestigt ist. Die innere Mantelfläche 46 ist als Innenkonus **52** mit einer Grundfläche, die von einer Kreisform verschieden ist, ausgebildet, wobei sich der Innenkonus 52 in Richtung der Oberseite 49 des Ringsegmentes 42 verjüngt.

Die Ausbildung der inneren Mantelfläche 46 als Innenkonus 52 mit einer nicht-kreisförmigen Grundfläche hat den Vorteil, dass die Kontaktfläche zwischen dem Ringsegment 42 und dem Bohrkern 33 reduziert werden kann. Durch die Verjüngung des Innenkonus in Richtung der Oberseite 49 des Ringsegmentes 42 kann das Entfernen eines klemmenden Bohrkerns erleichtert werden. Das Risiko, dass der Bohrkern im Ringsegment 42 klemmt, ist im Bereich des kleinsten Innenabstandes am größten. Da die Oberseite 49 des Ringsegmentes 42 für den Bediener zugänglich ist, kann der Bediener den klemmenden Bohrkern lösen und entfernen.

Die innere Mantelfläche 46 des Ringsegmentes 42 weist in der Ebene 25 senkrecht zur Längsachse 23 einen Innenabstand **B**(**ϕ, h)** zur Längsachse 23 auf. Dabei definiert der Innenabstand B(ϕ, h) eine mathematische Funktion, die den Verlauf des Innenabstandes über den Umfang und die Höhe des Ringsegmentes 42 beschreibt. Der Innenabstand B(ϕ, h) variiert in der Umfangsrichtung ϕ über den Umfang des Ringsegmentes 42 zwischen zwei Minimalwerten und zwei Maximalwerten; in der Höhenrichtung h variiert der Innenabstand B(ϕ, h) und nimmt in Richtung der Oberseite 49 des Ringsegmentes 42 ab. In der Ebene 25 senkrecht zur Längsachse 23 weist der Innenabstand B(ϕ, h) einen ersten Minimalwert **B_{min,1}**, einen ersten Maximalwert **B**_{**max**,1}, einen zweiten Minimalwert **B_{min,2}** und einen zweiten Maximalwert **B_{max,2}** auf.

Im Ausführungsbeispiel sind der erste Minimalwert B_{min,1} und zweite Minimalwert B_{min,2} in der Umfangsrichtung ϕ um ca. 180° zueinander versetzt und der erste Maximalwert B_{max,1} und zweite Maximalwert B_{max,2} sind in der Umfangsrichtung ebenfalls um ca. 180° zueinander versetzt. Bei einem Versatz von ca. 180° liegen die Minimalwerte B_{min,1}, B_{min,2} sowie die Maximalwerte B_{max,1}, B_{max,2} in der Umfangsrichtung ϕ einander gegenüber und führen zu einem spiegelsymmetrischen Aufbau der inneren Mantelfläche 46. Durch den symmetrischen Aufbau können Vibrationen der Bohrkrone 20 im Bohrbetrieb reduziert und die Laufruhe der Bohrkrone 20 verbessert werden.

## Patentansprüche

1. Ringbohrkrone (20), aufweisend:
▪ einen Bohrschaft (21), der einen Zylinder (24) mit einer Längsachse (23) aufweist, wobei der Zylinder (24) in einer Ebene (25) senkrecht zur Längsachse (23) einen Außendurchmesser (d_{A}), einen Innendurchmesser (d_{I}) und eine Schaftbreite (b) aufweist, und
▪ ein Ringsegment (22; 42), das mit einer Unterseite (28; 48) an einer Stirnfläche (31) des Bohrschaftes (21) befestigt ist und das eine innere Mantelfläche (26; 46) aufweist, die senkrecht zur Längsachse (23) des Bohrschaftes (21) einen Innenabstand (B(ϕ, h)) zur Längsachse (23) aufweist,
**dadurch gekennzeichnet, dass** der Innenabstand (B(ϕ, h)) in einer Umfangsrichtung (ϕ) einen ersten Minimalwert (B_{min,1}), einen zweiten Minimalwert (B_{min,2}), einen ersten Maximalwert (B_{max,1}) und einen zweiten Maximalwert (B_{max,2}) aufweist, wobei der erste Maximalwert (B_{max,1}) in der Umfangsrichtung (ϕ) zwischen dem ersten Minimalwert (B_{min,1}) und
zweiten Minimalwert (B_{min,2}) angeordnet ist und der zweite Maximalwert (B_{max,2}) in der Umfangsrichtung (ϕ) zwischen dem zweiten Minimalwert (B_{min,2}) und ersten Minimalwert (B_{min,1}) angeordnet ist.

2. Ringbohrkrone nach Anspruch 1, **dadurch gekennzeichnet, dass** der erste Minimalwert (B_{min,1}) und der zweite Minimalwert (B_{min,2}) übereinstimmen.

3. Ringbohrkrone nach einem der Ansprüche 1 bis 2, **dadurch gekennzeichnet, dass** der erste Minimalwert (B_{min,1}) und der zweite Minimalwert (B_{min,2}) in der Umfangsrichtung (ϕ) um ca. 180° zueinander versetzt sind.

4. Ringbohrkrone nach einem der Ansprüche 1 bis 3, **dadurch gekennzeichnet, dass** der Innenabstand (B(ϕ, h)) über den Umfang des Ringsegmentes (22; 42) eine mathematische Funktion beschreibt, die im Bereich des ersten Minimalwertes (B_{min,1}) und des zweiten Minimalwertes (B_{min,2}) streng monoton verlaufend ist.

5. Ringbohrkrone nach einem der Ansprüche 1 bis 4, **dadurch gekennzeichnet, dass** der erste Maximalwert (B_{max,1}) und der zweite Maximalwert (B_{max,2}) übereinstimmen.

6. Ringbohrkrone nach einem der Ansprüche 1 bis 5, **dadurch gekennzeichnet, dass** der erste Maximalwert (B_{max,1}) und der zweite Maximalwert (B_{max,2}) in der Umfangsrichtung (ϕ) um ca. 180° zueinander versetzt sind.

7. Ringbohrkrone nach Anspruch 6, **dadurch gekennzeichnet, dass** die innere Mantelfläche (26; 46) in der Ebene (25) senkrecht zur Längsachse (23) des Bohrschaftes (21) eine elliptische Form mit einer kurzen Halbachse (a₁) und einer langen Halbachse (a₂) aufweist, wobei der erste und zweite Minimalwert (B_{min,1}, B_{min,2}) die kurze Halbachse (a₁) und der erste und zweite Maximalwert (B_{max,1}, B_{max,2}) die lange Halbachse (a₂) bilden.

8. Ringbohrkrone nach einem der Ansprüche 1 bis 7, **dadurch gekennzeichnet, dass** die innere Mantelfläche (26) als Zylinder (32) mit einer Grundfläche, die von einer Kreisform verschieden ist, ausgebildet ist.

9. Ringbohrkrone nach einem der Ansprüche 1 bis 7, **dadurch gekennzeichnet, dass** die innere Mantelfläche (46) als Innenkonus (52), der sich in Richtung einer der Unterseite (48) des Ringsegmentes (42) gegenüberliegenden Oberseite (49) verjüngt, ausgebildet ist.

10. Ringbohrkrone nach Anspruch 9, **dadurch gekennzeichnet, dass** der Innenkonus (52) eine Grundfläche aufweist, die von einer Kreisform verschieden ist.
